# EUROPEAN PATENT SPECIFICATION

(11) **EP 0 578 353 B1**
(45) Date of publication and mention of the grant of the patent: **11.11.1998**
(21) Application number: 93303160.1
(22) Date of filing: 22.04.1993
(51) Int. Cl.: D04B 35/36, D06B 1/14, D06B 11/00

(54) **Apparatus and method for producing coloured knitted net**
Vorrichtung und Verfahren zur Herstellung von einem farbigen gestrickten Netz
Dispositif et procédé pour la production d'un filet en tricot coloré

(30) Priority: 09.07.1992 US 911194
(43) Date of publication of application: 12.01.1994
(73) Proprietor: TAMA PLASTIC INDUSTRY, IL-19236 Israel (IL)
(72) Inventor: Sa'don, Machluf Ilan, IL-19236 Israel (IL); Doron, Ishai, IL-19236 Israel (IL); Govrin, Ytzhak, IL-19236 Israel (IL)
(74) Representative: Woodward, John Calvin

(56) References cited:
- BE-A- 755 182
- DE-A- 2 437 918
- FR-A- 2 061 251
- GB-A- 318 840
- GB-A- 398 191
- US-A- 3 769 815
- US-A- 3 952 552
- US-A- 3 969 779
- US-A- 4 015 550
- US-A- 4 060 999
- US-A- 4 068 502

## Description

This invention relates to methods and apparatus for the production of colored knitted nets. More particularly, the invention relates to apparatus and methods for coloring individual ribbons of knitted nets.

Knitted nets are currently used for products including sacks for agricultural produce, bird protection nets, shading nets, insect protection nets and nets for wrapping round bales of hay. Such knitted nets are generally produced in a process which includes production of a primary film, slitting of the film into individual ribbons, orientating the ribbons, knitting the individual ribbons into a knitted net, and winding the knitted net onto a spool. The primary film may be produced in various colors according to the intended application of the knitted net.

Frequently, there is a desire for knitted net which includes a strip of a particular color that differs from the overall color of the net. This may be for providing a strip of a particular shade at the end or middle of the net to indicate the netting product as originating from a specific supplier. Different color markings for similar products may also be used either for marking the end of a roll or in conjunction with a photoelectric cell to count the number of cuts.

A common method of coloring knitted netting is to use bobbins of different colored ribbons. These bobbins of colored ribbons are conveniently placed at the knitting machine and the colored ribbons are threaded into the machine as replacements for the original ribbons. Usually these colored ribbons have some amount of orientation and the bobbins are, therefore, located after the orientation stage in the net production process. The original ribbons of the overall color which have been replaced are automatically wound onto rolls and then recycled.

In the Raschel method of knitting, two types of ribbons are employed; transverse ribbons and longitudinal ribbons. When there is a desire to change color in the netting in the longitudinal direction, ribbons may be replaced as described above. When there is a desire to change color in the transverse direction, however, the above described method may not be used as the knitting of the longitudinal ribbons takes less than a second. Shutting down the knitting machine, changing the ribbons, and restarting the machine to run for such a short period of time is extremely inefficient.

Accordingly, the existing coloring method is only useful when there is a need to color longitudinal ribbons. Additionally, multiple colored ribbons must be stocked, each having characteristics compatible with the final product. The existing coloring method also introduces technical complications in the net knitting procedure causing wastage of raw materials and increase in the cost of the final product.

Accordingly, there is a need in the art to provide an efficient method and apparatus for coloring knitted nets during production of the netting.

In view of the foregoing it is an object of the invention to provide an apparatus and method for producing colored knitted net which colors the individual ribbons of the knitted net.

It is a further object of the invention to provide an apparatus and method for producing colored knitted net which may be incorporated into the on-line production of the knitted net.

It is a further object of the invention to provide an apparatus and method for producing colored knitted net which is independent of the characteristics of the individual ribbons of the knitted net.

It is known from US-A-4060999 to provide an apparatus for producing knitted net from thermoplastic material comprising a source for supplying a plurality of individual oriented thermoplastic ribbons at a constant speed and a knitting apparatus for knitting said plurality of individual oriented thermoplastic ribbons into a net.

An apparatus for producing knitted net according to the present invention is characterised by a coloring apparatus disposed between the source and the knitting apparatus including means for coloring selected oriented thermoplastic ribbons of the plurality of individual oriented thermoplastic ribbons supplied from the source.

It is also known to provide a method of producing knitted net from thermoplastic material comprising the steps of supplying a plurality of individual oriented thermoplastic ribbons at constant speed and knitting them into a net.

A method of producing knitted net according to the present invention is characterised by the step of colouring selected oriented thermoplastic ribbons of the plurality of individual oriented thermoplastic ribbons supplied from the source before knitting them into the net.

In a preferred apparatus of the invention, the individual ribbon coloring apparatus is provided in the net production process after the orientation stage and prior to the knitting stage. All or some of the individual ribbons may pass through the coloring apparatus. Each ribbon passing through the coloring apparatus may be either included in or excluded from the coloring process in accordance with a control system which operates consistently with the knitting machine cycle, thereby selecting which of the individual ribbons are to be colored. It is thereby possible to program the system to color any particular area of the knitted net, including lengthwise, widthwise, strips or in any other desired pattern.

In one preferred embodiment, the coloring apparatus includes a roller which rotates in a bath of colored ink. The ribbons are colored by contacting the roller and will remain uncolored when not contacting the roller. A control system may be provided for raising the ribbons from the roller and may include an electromagnetic or pneumatic piston which is operated in accordance with signals coming from a real time control system. Alternatively, the complete coloring apparatus may be moved down and out of contact with the ribbons.

Preferred embodiments of the invention will now be described, by way of example only, with reference to the accompanying drawings, in which:
Figure 1 shows an apparatus for the production of knitted netting including the coloring apparatus in accordance with the invention;
Figure 2 is a side sectional view of the coloring apparatus;
Figure 3 is a front partially sectional view of the coloring apparatus;
Figure 4 is a side sectional view of an alternative embodiment of the coloring apparatus;
Figure 5 is a perspective view of a further alternative embodiment of the coloring apparatus; and
Figure 6 is a perspective view of a further alternative embodiment of the coloring apparatus.

In the following detailed description of the drawings wherein several alternative embodiments of the invention are discussed, like components are given like numeral designations for convenience.

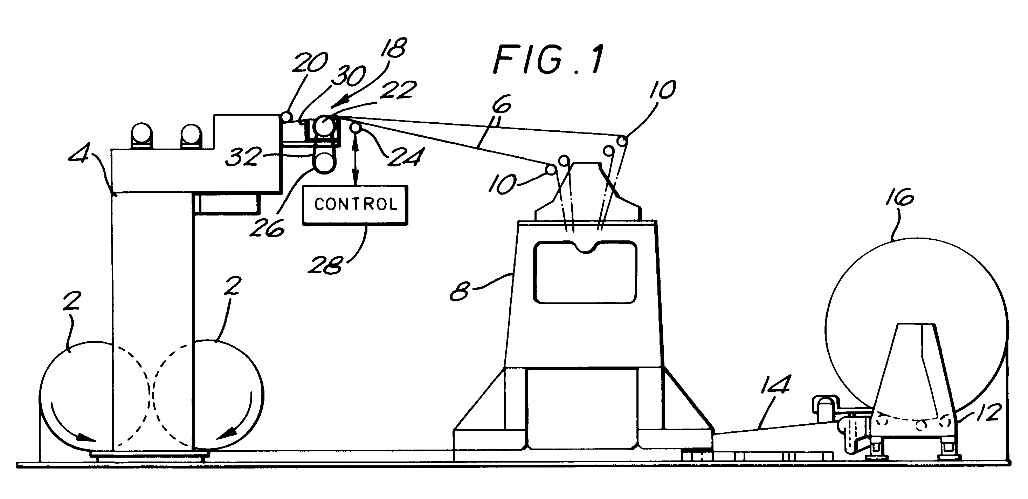

In Figure 1 is shown an apparatus for producing knitted netting. A primary film, e.g. linear low density polyethylene (LLDPE) is supplied on rolls 2. The primary film enters drawing unit 4 which slits and orients the primary film into individual ribbons 6. A drawing unit appropriate for this purpose is the ISO In-Line Drawing Unit for tape yarns from Karl Mayer (Germany). The individual ribbons 6 exit the drawing unit and enter knitting machine 8 via alignment rollers 10. Knitting machine 8 knits the individual ribbons 6 into a continuous Raschel knitted net 14. Appropriate knitting machines for this purpose is the Raschel machine from Karl Mayer (Germany) or similar machines. The continuous knitted netting 14 is wound onto roll 16 by winding machine 12.

In accordance with the invention, coloring apparatus 18, interposed between drawing unit 4, where the primary film is slit and oriented into individual ribbons, and knitting machine 8, where the knitted netting is actually knit. Coloring apparatus 18 includes alignment roller 20, coloring roller 22 and contact roller 24. Coloring roller 22 is located in vessel 30 and is connected by drive belt 32 to motor 26. Alternatively, the coloring roller may be driven by direct motor connection. Movement of contact roller 24 is controlled by control 28 to engage or disengage the individual ribbons 6 from contact with coloring roller 22.

It will be appreciated from Figure 1 that the preferred point in the net production process to color the individual ribbons is after the ribbons are oriented and before the ribbons are knitted into the net. If coloring is performed before orientation, the colored ink which colors the ribbon will be spread over an area 5-7 times longer than the original area because of the drawing process during ribbon orientation. The color will, therefore, become very dull. There may also be unexpected reactions of the colored ink on the ribbon because of the heat which is needed for orientation.

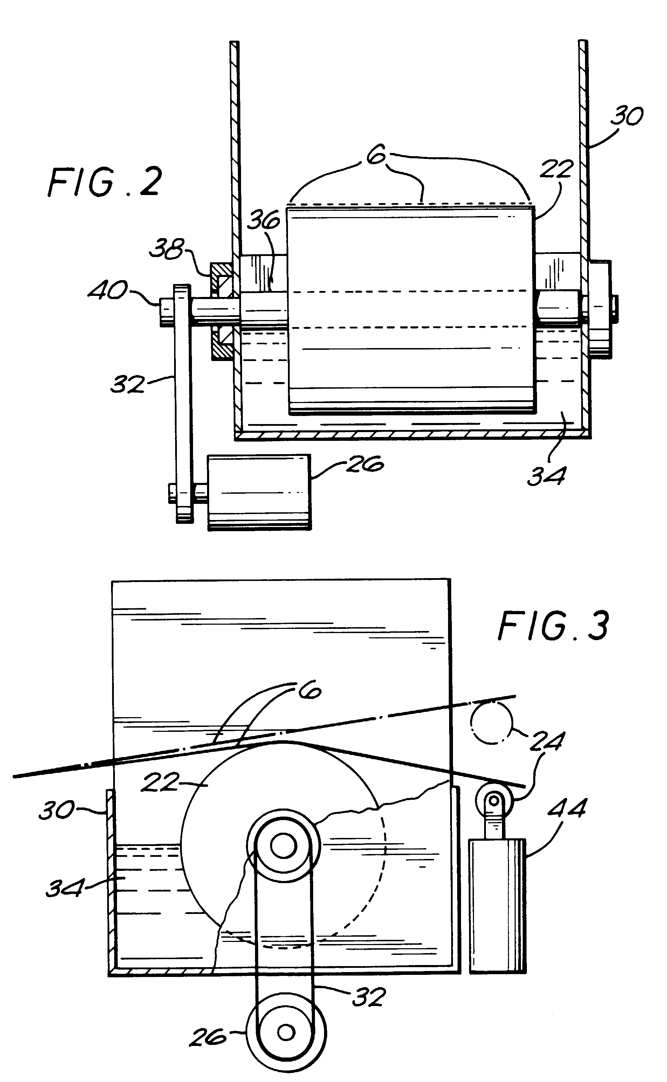

In Figure 2 is shown a side sectional view of the coloring apparatus in accordance with the invention. The coloring apparatus includes a vessel 30 filled with a desired colored ink 34 to a predetermined level. The preferred colored ink includes a basic coloring agent NEWFLEX OD C/41 made by SUNCHEMICAL and may be mixed with a solvent that evaporates quickly. Various paints may also be used.

Inside the vessel there is a rough coloring roller 22 which has about half of its diameter immersed in the colored ink 34 and which rotates on an axle 36. The coloring roller 22 is a simple rough metal axle with a knurled roller surface. The axle 36 is supported by two sealed bearings 38. A length 40 of the axle protrudes through the walls of the vessel 30 and beyond the bearings 38. A small motor 26 rotates the coloring roller 22 via drive belt 32 connected to the protruding length of the axle.

The individual ribbons 6 pass transverse to the axial direction of the coloring roller 22 and contact the upper circumference of the coloring roller. When in contact with the coloring roller 22, the colored ink will color one side of the individual ribbons 6 as the coloring roller 22 rotates in colored ink 34.

In accordance with signals from a real time control system, rotation of the coloring roller may be controlled. Such control systems for the dyeing and printing of materials are known in the art and are described, e.g. in US Patent No.3,969,779. When the coloring roller does not rotate, colored ink does not reach the upper portion of the coloring roller circumference and the coloring of the individual ribbons ceases.

Alternatively, as shown in Figure 3, contact roller 24 may be positioned downstream of rough roller 22 and controlled by electromagnetic or pneumatic piston 44 to alter the path of travel of individual ribbons 6. When piston 44 is retracted, contact roller 24 allows contact between individual ribbons 6 and coloring roller 22. When extended, contact roller 24 alters the path of travel of individual ribbons 6 thereby preventing contact between the individual ribbons and coloring roller 22. In the extended position, no coloring of the individual ribbons occurs despite continued rotation of the coloring roller.

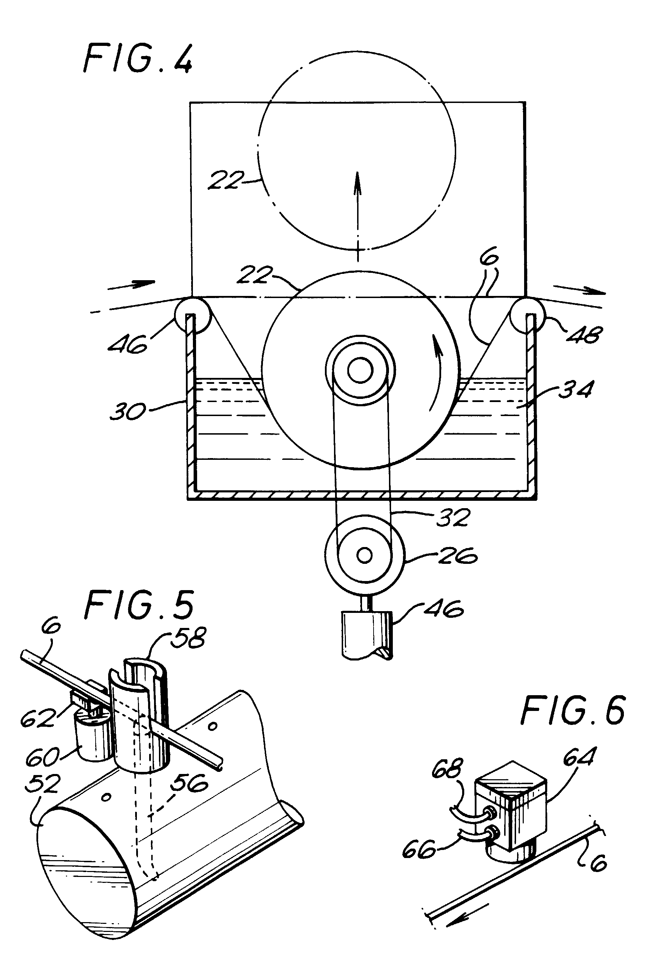

Two-sided coloring of the ribbons can be accomplished by repositioning the ribbons so that the ribbons contact the lower circumference of the coloring roller 22. In Figure 4, an entrance roller 46 and an exit roller 48 are provided at vessel 30 to direct the path of travel of individual ribbons 6 to the underside of coloring roller 22.

In accordance with this embodiment, the path of travel of the individual ribbons 6 is directly through the colored ink 34 and in contact with coloring roller 22 thereby coloring both sides of the individual ribbons. Electromagnetic or pneumatic piston 46 is provided to raise and lower coloring roller 22 and motor 26 to bring coloring roller 22 in and out of contact with individual ribbons 6.

In this case, when coloring is to be stopped, the coloring roller is raised in order to allow free passage of the individual ribbons. In its raised position individual ribbons 6 travel directly from entrance roller 46 to exit roller 48 without contacting either coloring roller 22 or colored ink 34.

Accordingly, no coloring of individual ribbons 6 occurs in this condition.

As another alternative embodiment of the invention, the coloring apparatus may be implemented utilizing capillary action. As shown in Figure 5, a cylindrical vessel 52 is filled with colored ink 34 to about half its diameter. A thread 56 is held by a thread support 58 located perpendicular to the passage of the individual ribbons 6 and is immersed into the colored ink 34.

As the ribbon 6 passes through the thread support 58, the ribbon contacts the upper portion of the thread 56 which is wet with colored ink because of capillary action. It may be appreciated that a particular advantage of this embodiment is that no moving parts are required for the coloring apparatus itself. If an interruption in coloring is desired, the ribbon 6 is simply moved upward and out of contact with the thread by a pneumatic or electromagnetic cylinder 60 with ribbon guide 62.

Control of the movement of the above-described rollers and pistons may be obtained via electromagnetic or pneumatic devices as are commonly known in the art and may be maintained under computer programmed control. A movement of about 1-3mm is sufficient to break the contact between the coloring device and the individual ribbons. When the ribbons are raised, contact between the coloring device and the individual ribbons is broken and coloring ceases. It will be appreciated that this method and apparatus for producing colored knitted net is extremely versatile and with appropriate control any colored pattern may be created.

As a further embodiment, the coloring apparatus may also be implemented using an ink jet printer as shown in Figure 6. Ink jet 64 is positioned directly above individual ribbons 6 and is connected via feed line 66 to a colored ink supply and via connection 68 to an appropriate control system. An appropriate ink jet printer is ALPHA JET by Metronic Geratebau GmbH & Co. (Germany).

Ink jet printers create an electrostatic field which moves the ink jet in order to create letters and other complex patterns. For printing on ribbons, however, all that is required is on/off control of the ink jet. Ink jet equipment works very fast creating a printed line 3mm thick at a speed of 600 m/min. At this rate, an ink jet can print by line scanning (similar to a printer wherein the print head moves horizontally and the paper moves vertically) at a rate of about 1.8 sq. m/min. This printing rate is sufficient for coloring oriented ribbons. It will be appreciated that an advantage of this embodiment is that the ribbons which are to be colored may be scanned and colored by the ink jet printer under computer program control, instead of mechanically picking-up the ribbons when the ribbons are not to be colored.

Advantageously, the ability of having full program control of the position of "jet on" or "jet off" signals allows continuous control as to which (and when) individual ribbons will be colored. This particular embodiment may also be implemented with less physical equipment than previously described embodiments.

## Claims

1. An apparatus for producing knitted net from thermoplastic material comprising a source (2,4) for supplying a plurality of individual oriented thermoplastic ribbons at a constant speed and a knitting apparatus (8) for knitting said plurality of individual oriented thermoplastic ribbons (6) into a net **characterised by** a colouring apparatus (8) disposed between the source (2,4) and the knitting apparatus (8) including means (22,24,46,60,64) for colouring selected oriented thermoplastic ribbons of the plurality of individual oriented thermoplastic ribbons (6) supplied from the source (2,4).

2. An apparatus according to claim 1, characterised in that said plurality of individual ribbons (6) consist essentially of linear low density polyethylene.

3. An apparatus according to claim 1 or claim 2 characterised in that said plurality of individual ribbons (6) are produced from a primary film.

4. An apparatus according to any preceding claim characterised in that said knitting apparatus (8) is adapted to knit a Raschel net.

5. An apparatus according to any preceding claim characterised in that said colouring apparatus is characterised by an ink supply (30) and a colouring roller (22) adapted to apply ink (34) from said ink supply to said selected ribbons (6) of said plurality of individual ribbons.

6. An apparatus according to claim 5, characterised by means for controlling rotation of said colouring roller (22).

7. An apparatus according to claim 5 or claim 6 further characterised by means for controlling the contact between said colouring roller (22) and said selected ribbons (6) of said plurality of individual ribbons.

8. An apparatus according to claim 1, characterised in that said colouring apparatus (8) is characterised by an ink supply (30) and a means (56) for transferring ink from said ink supply (30) to said individual ribbons (6) by capillary action.

9. An apparatus according to claim 8, further characterised by means for controlling the application of ink (30) by said means (56) for transferring to said selected ribbons of said plurality of individual ribbons (6).

10. An apparatus according to claim 1 wherein said colouring apparatus (8) is characterised by an ink supply (30) and an ink jet (64) for applying ink from said ink supply to said selected ribbons of said plurality of individual ribbons (6).

11. An apparatus according to claim 10 characterised by means for controlling the operation of said ink jet (64).

12. A method of producing knitted net from thermoplastic material comprising the steps of supplying a plurality of individual oriented thermoplastic ribbons (6) at constant speed and knitting them into a net **characterised by** the step of colouring selected oriented thermoplastic ribbons of the plurality of individual oriented thermoplastic ribbons (6) supplied from the source before knitting them into the net.

13. A method according to claim 12 further characterised by the step of knitting the plurality of individual ribbons into a Raschel net.

14. A method according to claim 12 or claim 13 further characterised by the step of applying ink from an ink supply to the selected ribbons of the plurality of individual ribbons with a colouring roller.

15. A method according to claim 14 further characterised by the step of controlling the rotation of the colouring roller.

16. A method according to claim 14 or claim 15 further characterised by the step of controlling contact between the colouring roller and the selected ribbons of the plurality of individual ribbons.

17. A method according to claim 12 or claim 13 further characterised by the step of transferring ink from an ink supply to the selected ribbons of the plurality of individual ribbons by capillary action.

18. A method according to claim 17, further characterised by the step of controlling the transfer of ink between the ink supply and the selected ribbons of the plurality of individual ribbons.

19. A method according to claim 12 or claim 13 further characterised by the step of applying ink from an ink supply to the selected ribbons of the plurality of individual ribbons by an ink jet.

20. A method according to claim 19 further characterised by the step of controlling the operation of the ink jet.

## Patentansprüche

1. Vorrichtung zur Herstellung eines gestrickten bzw. gewirkten Netzes aus thermoplastischem Material, umfassend eine Quelle (2, 4) zum Zuleiten einer Mehrzahl einzelner gereckter thermoplastischer Bänder mit konstanter Geschwindigkeit und eine Wirkvorrichtung (8) zum Wirken der Mehrzahl einzelner gereckter thermoplastischer Bänder (6) zu einem Netz, **gekennzeichnet durch** eine Färbevorrichtung (18), die zwischen der Quelle (2, 4) und der Wirkvorrichtung (8) angeordnet ist, umfassend Mittel (22, 24, 46, 60, 64) zum Färben ausgewählter gereckter thermoplastischer Bänder aus der Mehrzahl einzelner gereckter thermoplastischer Bänder (6), die von der Quelle (2, 4) zugeführt werden.

2. Vorrichtung nach Anspruch 1, dadurch gekennzeichnet, daß die Mehrzahl einzelner Bänder (6) im wesentlichen aus linearem Polyethylen niedriger Dichte besteht.

3. Vorrichtung nach Anspruch 1 oder Anspruch 2, dadurch gekennzeichnet, daß die Mehrzahl einzelner Bänder (6) aus einer Ausgangsfolie hergestellt wird.

4. Vorrichtung nach einem der vorangehenden Ansprüche, dadurch gekennzeichnet, daß die Wirkvorrichtung (8) zum Wirken eines Raschel-Netzes eingerichtet ist.

5. Vorrichtung nach einem der vorangehenden Ansprüche, dadurch gekennzeichnet, daß die Färbevorrichtung durch eine Tintenversorgung (30) und eine Färbewalze (22) gekennzeichnet ist, die zum Auftragen von Tinte (34) von der Tintenversorgung auf die ausgewählten Bänder (6) der Mehrzahl einzelner Bänder eingerichtet ist.

6. Vorrichtung nach Anspruch 5, gekennzeichnet durch Mittel zum Steuern der Drehung der Färbewalze (22).

7. Vorrichtung nach Anspruch 5 oder Anspruch 6, ferner gekennzeichnet durch Mittel zum Steuern des Kontakts zwischen der Färbewalze (22) und den ausgewählten Bändern (6) der Mehrzahl einzelner Bänder.

8. Vorrichtung nach Anspruch 1, dadurch gekennzeichnet, daß die Färbevorrichtung (8) durch eine Tintenversorgung (30) und ein Mittel (56) zum Übertragen von Tinte von der Tintenversorgung (30) auf die einzelnen Bänder (6) durch Kapillarwirkung gekennzeichnet ist.

9. Vorrichtung nach Anspruch 8, ferner gekennzeichnet durch Mittel zum Steuern des Auftragens von Tinte (30) seitens des Übertragungsmittels (56) auf die ausgewählten Bänder der Mehrzahl einzelner Bänder (6).

10. Vorrichtung nach Anspruch 1, wobei die Färbevorrichtung (8) gekennzeichnet ist durch eine Tintenversorgung (30) und einen Tintenstrahl (64) zum Auftragen von Tinte von der Tintenversorgung auf die ausgewählten Bänder der Mehrzahl einzelner Bänder (6).

11. Vorrichtung nach Anspruch 10, gekennzeichnet durch Mittel zum Steuern des Betriebs des Tintenstrahls (64).

12. Verfahren zur Herstellung eines gestrickten bzw. gewirkten Netzes aus thermoplastischem Material, umfassend die Schritte der Zuführung einer Mehrzahl einzelner gereckter thermoplastischer Bänder (6) mit konstanter Geschwindigkeit und des Wirkens dieser zu einem Netz, **gekennzeichnet durch** den Schritt des Färbens ausgewählter gereckter thermoplastischer Bänder aus der Mehrzahl einzelner gereckter thermoplastischer Bänder (6), die von der Quelle zugeführt werden, bevor sie zu einem Netz gewirkt werden.

13. Verfahren nach Anspruch 12, ferner gekennzeichnet durch den Schritt des Wirkens der Mehrzahl einzelner Bänder zu einem Raschel-Netz.

14. Verfahren nach Anspruch 12 oder Anspruch 13, ferner gekennzeichnet durch den Schritt des Auftragens von Tinte von einer Tintenversorgung auf die ausgewählten Bänder der Mehrzahl einzelner Bänder mit einer Färbewalze.

15. Verfahren nach Anspruch 14, ferner gekennzeichnet durch den Schritt des Steuerns der Drehung der Färbewalze.

16. Verfahren nach Anspruch 14 oder Anspruch 15, ferner gekennzeichnet durch den Schritt des Steuerns des Kontakts zwischen der Färbewalze und den ausgewählten Bändern der Mehrzahl einzelner Bänder.

17. Verfahren nach Anspruch 12 oder Anspruch 13, ferner gekennzeichnet durch den Schritt des Übertragens von Tinte von einer Tintenversorgung auf die ausgewählten Bänder der Mehrzahl einzelner Bänder mittels Kapillarwirkung.

18. Verfahren nach Anspruch 17, ferner gekennzeichnet durch den Schritt des Steuerns der Übertragung von Tinte zwischen der Tintenversorgung und den ausgewählten Bändern der Mehrzahl einzelner Bänder.

19. Verfahren nach Anspruch 12 oder Anspruch 13, ferner gekennzeichnet durch den Schritt des Auftragens von Tinte von einer Tintenversorgung auf die ausgewählten Bänder der Mehrzahl einzelner Bänder mittels eines Tintenstrahls.

20. Verfahren nach Anspruch 19, ferner gekennzeichnet durch den Schritt des Steuerns des Betriebs des Tintenstrahls.

## Revendications

1. Un appareillage pour la production de filet tricoté à partir de matière thermoplastique, comprenant une source (2, 4) fournissant une pluralité de rubans thermoplastiques orientés individuels à vitesse constante et un appareillage de tricotage (8) pour tricoter cette pluralité de rubans thermoplastiques orientés individuels (6) en filet, **caractérisé par** un appareillage de coloration (18) disposé entre la source (2, 4) et l'appareillage de tricotage (8), comprenant des moyens (22, 24, 46, 60, 64) pour colorer des rubans thermoplastiques orientés sélectionnés dans la pluralité de rubans thermoplastiques orientés individuels (6) fournis par la source (2, 4).

2. Un appareillage selon la revendication 1, caractérisé en ce que ladite pluralité de rubans individuels (6) sont constitués essentiellement en polyéthylène linéaire à basse densité.

3. Un appareillage selon la revendication 1 ou la revendication 2, caractérisé en ce que ladite pluralité de rubans individuels (6) sont produits à partir d'une pellicule primaire.

4. Un appareillage selon l'une quelconque des revendications précédentes, caractérisé en ce que ledit appareillage de tricotage (8) est adapté à tricoter un filet de type Raschel.

5. Un appareillage selon l'une quelconque des revendications précédentes, caractérisé en ce que ledit appareillage de coloration est caractérisé par une source d'encre (30) et un rouleau de coloration (22) permettant d'appliquer de l'encre (34) de ladite source d'encre (30) auxdits rubans sélectionnés (6) dans ladite pluralité de rubans individuels.

6. Un appareillage selon la revendication 5, caractérisé par des moyens pour contrôler la rotation dudit rouleau de coloration (22).

7. Un appareillage selon la revendication 5 ou la revendication 6, caractérisé au surplus par des moyens pour contrôler le contact entre ledit rouleau de coloration (22) et lesdits rubans sélectionnés (6) dans ladite pluralité de rubans individuels.

8. Un appareillage selon la revendication 1, caractérisé en ce que ledit appareillage de coloration est caractérisé par une source d'encre (30) et des moyens (56) pour transférer de l'encre depuis ladite source d'encre (30) auxdits rubans individuels (6) par action capillaire.

9. Un appareillage selon la revendication 8, caractérisé au surplus par des moyens pour contrôler l'application de l'encre (30) par lesdits moyens (56) pour le transférer auxdits rubans sélectionnés dans ladite pluralité de rubans individuels (6).

10. Un appareillage selon la revendication 1, dans lequel ledit appareillage de coloration est caractérisé par une source d'encre (30) et un jet d'encre (64) pour l'application de l'encre depuis ladite source d'encre auxdits rubans sélectionnés dans ladite pluralité de rubans individuels (6).

11. Un appareillage selon la revendication 10, caractérisé par des moyens pour le contrôle du fonctionnement dudit jet d'encre (64).

12. Une méthode pour la production de filet tricoté à partir de matière thermoplastique, comprenant les étapes consistant à fournir une pluralité de rubans thermoplastiques orientés individuels (6) à vitesse constante et à les tricoter en filet, caractérisée par l'étape consistant à colorer des rubans thermoplastiques orientés sélectionnés dans la pluralité de rubans thermoplastiques orientés individuels (6) fournis par la source avant de les tricoter en filet.

13. La méthode selon la revendication 12, caractérisée au surplus par l'étape consistant à tricoter la pluralité de rubans individuels en un filet du type Raschel.

14. Une méthode selon la revendication 12 ou la revendication 13, caractérisée au surplus par l'étape consistant à appliquer l'encre provenant d'une source d'encre aux rubans sélectionnés dans la pluralité de rubans individuels au moyen d'un rouleau de coloration.

15. Une méthode selon la revendication 14, caractérisée au surplus par l'étape consistant à contrôler la rotation du rouleau de coloration.

16. Une méthode selon la revendication 14 ou la revendication 15, caractérisée au surplus par l'étape consistant à contrôler le contact entre le rouleau de coloration et les rubans sélectionnés dans la pluralité de rubans individuels.

17. Une méthode selon la revendication 12 ou la revendication 13, caractérisée au surplus par l'étape consistant à transférer de l'encre depuis une source d'encre aux rubans sélectionnés dans la pluralité de rubans individuels par action capillaire.

18. Une méthode selon la revendication 17, caractérisée au surplus par l'étape consistant à contrôler le transfert de l'encre entre la source d'encre et les rubans sélectionnés dans la pluralité de rubans individuels.

19. Une méthode selon la revendication 12 ou la revendication 13, caractérisée au surplus par l'étape consistant à appliquer de l'encre depuis une source d'encre aux rubans sélectionnés dans la pluralité de rubans individuels par un jet d'encre.

20. Une méthode selon la revendication 17, caractérisée au surplus par l'étape consistant à contrôler le fonctionnement du jet d'encre.
